# EUROPEAN PATENT SPECIFICATION

(11) **EP 4 191 571 B1**
(45) Date of publication and mention of the grant of the patent: **19.08.2026**
(21) Application number: 22205627.7
(22) Date of filing: 04.11.2022
(51) Int. Cl.: G09G 3/32, G09G 3/3233

(54) **ELECTRONIC DEVICE**
ELEKTRONISCHE VORRICHTUNG
DISPOSITIF ÉLECTRONIQUE

(30) Priority: 01.12.2021 US 202163284644 P; 29.08.2022 US 202217897225
(43) Date of publication of application: 07.06.2023
(73) Proprietor: InnoLux Corporation, Miaoli County 35053 (TW)
(72) Inventor: HASHIMOTO, Kazuyuki, Jhunan Town, Miaoli County 35053 (TW); KUO, Kung-Chen, Jhunan Town, Miaoli County (TW)
(74) Representative: Becker, Eberhard

(56) References cited:
- US-A1- 2005 200 572
- US-A1- 2015 154 906
- US-A1- 2018 286 307
- US-A1- 2020 211 452
- US-A1- 2020 342 809

## Description

### BACKGROUND

### Technical Field

The disclosure relates to a light-emitting diode, LED, active-matrix device including a plurality of data lines, a plurality of scan lines and a pixel array, particularly, the disclosure relates to an electronic device included in each pixel of the pixel array.

### Description of Related Art

In general, the voltage source circuit is controlled with the data voltage passed through a scan transistor. However, the scan transistor may include the clock feedthrough effect, and the clock feedthrough effect may cause the data voltage shift and makes control accuracy worse. In this regard, the existing technical means is to increase the size of the storage capacitor to maintain the data voltage and reduce the impact of clock feedthrough. But this countermeasure makes layout difficult, requiring larger scan transistors to charge the storage capacitor if scan time is tight. However, increasing the size of the scan transistors will make the clock feedthrough effect larger and may be mitigated by a larger storage capacitor.

US 20180286307A1 provides an organic light emitting display device. The organic light emitting display device includes a plurality of pixels. Each of the pixels includes an organic light emitting diode, first to third transistors, a storage capacitor, and a first capacitor. The second transistor includes a gate electrode receiving a first scan signal, a first electrode receiving a data signal, and a second electrode connected to a first electrode of the first transistor. The third transistor includes a gate electrode receiving a second scan signal, a first electrode connected to a second electrode of the first transistor, and a second electrode connected to a gate electrode of the first transistor. The storage capacitor includes a first electrode receiving a power voltage and a second electrode connected to the gate electrode of the first transistor. The first capacitor includes a first electrode connected to the gate electrode of the third transistor and a second electrode receiving the power voltage.

US 20200342809A1 provides a display device. The display device includes: an organic light emitting diode (OLED); a pixel circuit configured to control an amount of a current flowing from a first power voltage to the OLED; and a gate line and a data line that are connected to the pixel circuit, the pixel circuit including: an auxiliary transistor including a gate electrode electrically connected to the data line and a first electrode and a second electrodes connected to the gate line, the first electrode and the second electrode of the auxiliary transistor being electrically connected to each other.

US 2005200572A1, US 2015154906A1 and US 2020211452A1 disclose further active-matrix light-emitting diode display devices.

### SUMMARY

The invention is set out in the appended set of claims. The following disclosure serves a better understanding of the present invention. The invention relates to a light-emitting diode, LED, active-matrix display device including data lines, scan lines and a pixel array. Each pixel of the pixel array includes the electronic device and a light-emitting diode. The electronic device of the disclosure includes a first scan transistor, a voltage source circuit, a first capacitor, and a second capacitor. The first scan transistor includes a first terminal, a second terminal and a control terminal. The control terminal of the first scan transistor is connected to one of the scan lines. The voltage source circuit includes a driving transistor and a compensation transistor. The driving transistor is electrically connected to the first scan transistor. The driving transistor includes a first terminal, a second terminal and a control terminal, and the compensation transistor including a first terminal, a second terminal and a control terminal. The light-emitting diode is electrically connected to the first terminal of the driving transistor at a first node. The first terminal of the first capacitor is electrically connected to the control terminal of the driving transistor. The second terminal of the first capacitor is electrically connected to a bias terminal. The first terminal of the second capacitor is electrically connected to the first node, and a second terminal of the second capacitor is electrically connected to the bias terminal. The first terminal of the first scan transistor is electrically connected to one of the data lines, and the second terminal of the first scan transistor is electrically connected to the first node. The second terminal of the driving transistor is electrically connected to the first terminal of the compensation transistor. The control terminal of the driving transistor is electrically connected to the second terminal of compensation transistor. The control terminal of the compensation transistor is electrically connected to said scan line. The LED active-matrix display device is configured to supply a scan signal to said scan line and a bias signal to said bias terminal. As such, at the beginning of a scan period, the scan signal switches from a low voltage level to a high voltage level to turn the first scan transistor on and the compensation transistor on, and the compensation signal remains at the low voltage level. At the end of the scan period, the scan signal switches from the high voltage level to the low voltage level to turn the first scan transistor off and the compensation transistor off, and the compensation signal remains at the low voltage level. Then, during a bias period, the bias signal switches from the low voltage level to the high voltage level, and the first and second capacitors are configured to compensate for the clock feedthrough effect at the first node and the control terminal of the driving transistor, occurring when the scan transistor and the compensation transistor are switched from turn-on to turn-off at the end of the scan period.

Based on the above, according to the electronic device of the disclosure, the display device can effectively drive the pixels by reducing or eliminating the clock feedthrough effect.

To make the aforementioned more comprehensible, several embodiments accompanied with drawings are described in detail as follows.

### BRIEF DESCRIPTION OF THE DRAWINGS

The accompanying drawings are included to provide a further understanding of the disclosure and are incorporated in and constitute a part of this specification. The drawings illustrate exemplary embodiments of the disclosure and, together with the description, serve to explain the principles of the disclosure.
FIG. 1 is a schematic diagram of an electronic device according to an embodiment of the disclosure.
FIG. 2A is a timing diagram of related voltages and signals according to the embodiment of FIG. 1 of the disclosure.
FIG. 2B is another timing diagram of related voltages and signals according to the embodiment of FIG. 1 of the disclosure.
FIG. 3A is a schematic diagram of a capacitive coupling component according to an embodiment of the disclosure.
FIG. 3B is a schematic diagram of a capacitive coupling component according to another embodiment of the disclosure.
FIG. 4 is a schematic diagram of an electronic device with threshold voltage compensation according to an embodiment of the disclosure.
FIG. 5 is a schematic diagram of an electronic device without threshold voltage compensation according to an embodiment of the disclosure, that is not part of the invention.
FIG. 6 is a timing diagram of related voltages and signals according to the embodiment of FIG. 4 of the disclosure.
FIG. 7 is a schematic diagram of an electronic device with threshold voltage compensation according to an embodiment of the disclosure, that is not part of the invention.
FIG. 8 is a schematic diagram of an electronic device without threshold voltage compensation according to an embodiment of the disclosure, that is not part of the invention.
FIG. 9 is a timing diagram of related voltages and signals according to the embodiment of FIG. 7 of the disclosure.

### DESCRIPTION OF THE EMBODIMENTS

Reference will now be made in detail to the exemplary embodiments of the disclosure, examples of which are illustrated in the accompanying drawings. Whenever possible, the same reference numbers are used in the drawings and the description to refer to the same or like components.

Certain terms are used throughout the specification and appended claims of the disclosure to refer to specific components. Those skilled in the art should understand that electronic device manufacturers may refer to the same components by different names. This article does not intend to distinguish those components with the same function but different names. In the following description and rights request, the words such as "comprise" and "include" are open-ended terms, and should be explained as "including but not limited to...".

The term "coupling (or electrically connection)" used throughout the whole specification of the present application (including the appended claims) may refer to any direct or indirect connection means. For example, if the text describes that a first device is coupled (or connected) to a second device, it should be interpreted that the first device may be directly connected to the second device, or the first device may be indirectly connected through other devices or certain connection means to be connected to the second device. The terms "first", "second", and similar terms mentioned throughout the whole specification of the present application (including the appended claims) are merely used to name discrete elements or to differentiate among different embodiments or ranges. Therefore, the terms should not be regarded as limiting an upper limit or a lower limit of the quantity of the elements and should not be used to limit the arrangement sequence of elements. In addition, wherever possible, elements/components/steps using the same reference numerals in the drawings and the embodiments represent the same or similar parts. Reference may be mutually made to related descriptions of elements/components/steps using the same reference numerals or using the same terms in different embodiments.

The electronic device of the disclosure includes a light-emitting diode active-matrix display device including a plurality of data lines, a plurality of scan lines and a pixel array. It should be noted that, the display device of the disclosure may be manufactured using a display panel process, and related transistors and electronic components are fabricated on a glass substrate.

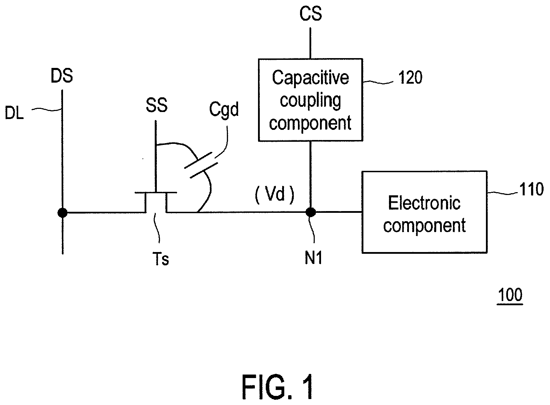

FIG. 1 is a schematic diagram of an electronic device according to an embodiment of the disclosure. Referring to FIG. 1, an electronic device 100 includes an electronic component 110, a capacitive coupling component 120, a scan transistor Ts and a data line DL. The electronic component 110 is electrically connected to the scan transistor Ts and a capacitive coupling component 120 through a node N1. A first terminal of the scan transistor Ts is electrically connected to the data line DL. A second terminal of the scan transistor Ts is electrically connected to the electronic component 110 and the capacitive coupling component 120 through the node N1. The capacitive coupling component 120 may further electrically connected to a compensation signal CS. A control terminal of the scan transistor Ts is electrically connected to a scan signal SS. In the embodiment of the disclosure, the scan transistor Ts may be an N-type transistor or a P-type transistor. In addition, in some embodiment of the disclosure, the electronic device 100 may further include a storage capacitor, and the storage capacitor is electrically connected to the node N1.

In the embodiment of the disclosure, the scan transistor Ts transfers a data voltage to the node N1 according to a data signal DS transmitted by the data line DL, so as to drive the electronic component 110. During the scan transistor Ts is switched from turn-on to turn-off, the control terminal and the second terminal of the scan transistor Ts may have a coupling capacitor Cgd, which may cause the clock feedthrough effect at the node N1. In the embodiment of the disclosure, the capacitive coupling component 120 may compensate the clock feedthrough effect according to the compensation signal CS.

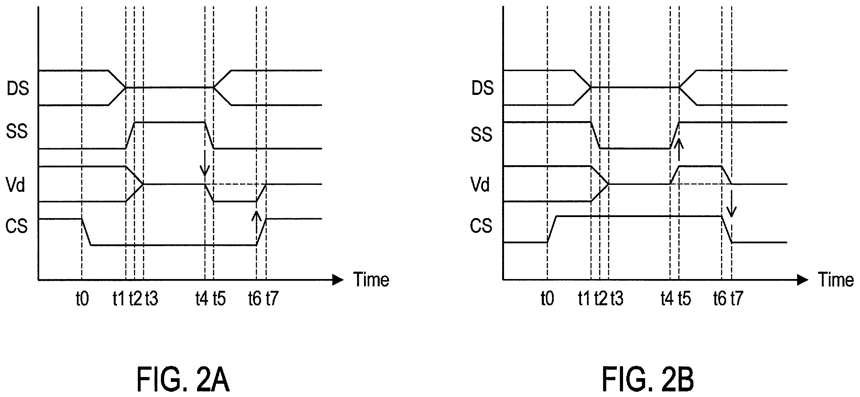

FIG. 2A is a timing diagram of related voltages and signals according to the embodiment of FIG. 1 of the disclosure. Referring to FIG. 1 and FIG. 2A, in the embodiment of the disclosure, assuming that the scan transistor Ts is the N-type transistor. The voltage of the compensation signal CS provided by the capacitive coupling component 120 may change to the low voltage level at time t0, and may change to the high voltage level at time t6. During a period from time t1 to time t5, the data signal DS may have a data voltage, and the control terminal of the scan transistor Ts receives the scan signal SS. Form time t1 to time t2, the voltage of the scan signal SS rises from the low voltage level to the high voltage level. Thus, the node voltage Vd of the node N1 changes to the data voltage during the period from time t1 to time t3. Form time t4 to time t5, the scan signal SS falls from the high voltage level to the low voltage level, and the node voltage Vd of the node N1 fall during the period because the clock feedthrough effect caused by the coupling capacitor Cgd.

In the embodiment of the disclosure, form time t6 to time t7, the compensation signal CS provided by the capacitive coupling component 120 rises from the low voltage level to the high voltage level. Thus, the node voltage Vd of the node N1 may be compensated by the voltage rise of the compensation signal CS, thereby effectively maintaining the node voltage Vd of the node N1 at the data voltage after the scan transistor Ts is turned-off.

FIG. 2B is another timing diagram of related voltages and signals according to the embodiment of FIG. 1 of the disclosure. Referring to FIG. 1 and FIG. 2B, in the embodiment of the disclosure, assuming that the scan transistor Ts is the P-type transistor. The voltage of the compensation signal CS provided by the capacitive coupling component 120 may change to the high voltage level at time t0, and may change to the low voltage level at time t6. During a period from time t1 to time t5, the data signal DS may have a data voltage, and the control terminal of the scan transistor Ts receives the scan signal SS. Form time t1 to time t2, the voltage of the scan signal SS falls from the high voltage level to the low voltage level. Thus, the node voltage Vd of the node N1 changes to the data voltage during the period from time t1 to time t3. Form time t4 to time t5, the scan signal SS rises from the low voltage level to the high voltage level, and the node voltage Vd of the node N1 rises because of the clock feedthrough effect caused by the coupling capacitor Cgd.

In the embodiment of the disclosure, form time t6 to time t7, the compensation signal CS provided by the capacitive coupling component 120 falls from the high voltage level to the low voltage level. Thus, the node voltage Vd of the node N1 may be compensated by the voltage drop of the compensation signal CS, thereby effectively maintaining the node voltage Vd of the node N1 at the data voltage after the scan transistor is turned-off.

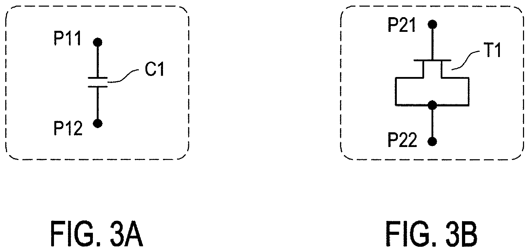

FIG. 3A is a schematic diagram of a capacitive coupling component according to an embodiment of the disclosure. Referring to FIG. 1 and FIG. 3A, the capacitive coupling component 120 of the embodiment of FIG. 1 may include a capacitor C1 as shown in FIG. 3A, and the capacitor C1 may be a metal-insulator-metal (MIM) capacitor. A first terminal of the capacitor C1 is electrically connected to the compensation signal CS through a node P11. A second terminal of the capacitor C1 is electrically connected to the node N1 through a node P12. Thus, the capacitor C1 may compensate the voltage of the node N1 according to the compensation signal CS.

FIG. 3B is a schematic diagram of a capacitive coupling component according to another embodiment of the disclosure. Referring to FIG. 1 and FIG. 3B, the capacitive coupling component 120 of the embodiment of FIG. 1 may include a transistor T1 as shown in FIG. 3B. A control terminal of the transistor T1 is electrically connected to the compensation signal CS through a node P21. A second terminal of the transistor T1 is electrically connected to a first terminal of the transistor T1 and the node N1 through a node P22. Thus, the transistor T1 may compensate the voltage of the node N1 according to the compensation signal CS.

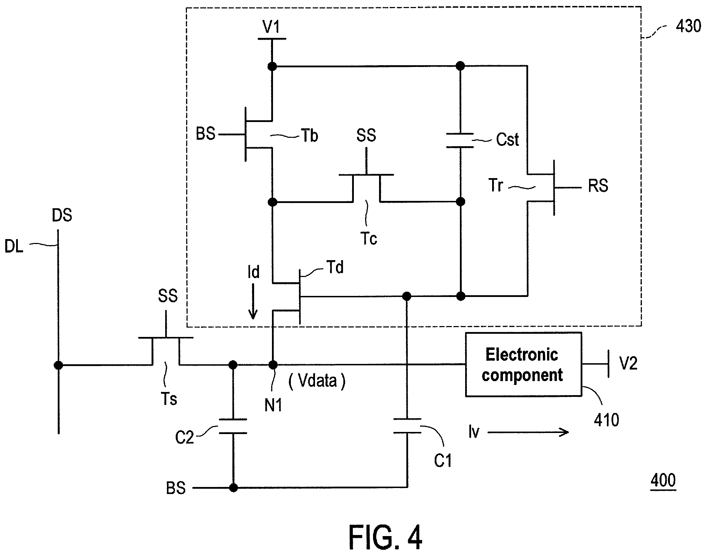

FIG. 4 is a schematic diagram of an electronic device with threshold voltage compensation according to an embodiment of the disclosure. Referring to FIG. 4, an electronic device 400 includes an electronic component 410, a voltage source circuit 430, a scan transistor Ts, a first capacitive coupling component, a second capacitive coupling component and data line DL. The electronic component 410 may include a varactor or other tunable component. The first capacitive coupling component is a capacitor C1 which is similar to the MIM capacitor shown in the embodiment of FIG. 3A, and the second capacitive coupling component is a capacitor C2 which is also similar as the MIM capacitor shown in the embodiment of FIG. 3A, but the disclosure is not limited thereto. In other embodiments of the disclosure, the first capacitive coupling component and the second capacitive coupling component may also be implemented as the transistor T1 of the embodiment of FIG. 3B respectively.

In the embodiment of the disclosure, the electronic component 410 is electronically connected to the scan transistor Ts and the capacitor C2 through a node N1. A first terminal of the scan transistor Ts is electrically connected to the data line DL. A second terminal of the scan transistor Ts is electrically connected to the electronic component 410 and the capacitor C2 through the node N1. A control terminal of the scan transistor Ts is electrically connected to a scan signal SS. The voltage source circuit 430 is electrically connected to the capacitor C1. A first terminal of the capacitor C2 is electrically connected to the second terminal of the scan transistor Ts and the electronic component 410 through the node N1. A first terminal of the capacitor C1 is electrically connected to the voltage source circuit 430. A second terminal of the capacitor C2 is electrically connected to a second terminal of the capacitor C1, and is electrically connected to a bias signal BS. The electronic component 410 is coupled between the node N1 and a second operation voltage V2.

In the embodiment of the disclosure, the voltage source circuit 430 includes a driving transistor Td, a compensation transistor Tc, a bias transistor Tb, a reset transistor Tr and a storage capacitor Cst. A first terminal of the driving transistor Td is electrically connected to the scan transistor Ts, the capacitor C2 and the electronic component 410 through the node N1. A second terminal of the driving transistor Td is electrically connected to the compensation transistor Tc and the bias transistor Tb. A control terminal of driving transistor Td is electrically connected to the compensation transistor Tc, the reset transistor Tr, the storage capacitor Cst and the capacitor C1. A first terminal of the bias transistor Tb is electrically connected to a first operation voltage V1. A second terminal of the bias transistor Tb is electrically connected to a first terminal of the driving transistor Td and a first terminal of the compensation transistor Tc. A control terminal of the bias transistor Tb is electrically connected to the bias signal BS. A first terminal of the storage capacitor Cst is electrically connected to the first operation voltage V1. A second terminal of the storage capacitor Cst is electrically connected to a second terminal of the compensation transistor Tc, a control terminal of the driving transistor Td and the first terminal of the capacitor C1. A first terminal of the reset transistor Tr is electrically connected to the first operation voltage V1. A second terminal of the reset transistor Tr is electrically connected to the control terminal of the driving transistor Td and the first terminal of the capacitor C1. A control terminal of the reset transistor Tr is electrically connected to a reset signal RS. In the embodiment of the disclosure, the first terminal and the second terminal of each above transistor may be a source terminal and a drain terminal, and the control terminal of the each above transistor may be a gate terminal. In the embodiment of the disclosure, the compensation transistor Tc, the bias transistor Tb and the reset transistor Tr may be an N-type transistor respectively, and the scan transistor Ts and the driving transistor Td may be an N-type transistor or a P-type transistor, respectively.

In the embodiment of the disclosure, the scan transistor Ts transfers a data voltage Vdata to the node N1 according to a data signal DS transmitted by the data line DL, and the voltage source circuit 430 may generate a compensation current Id to compensate a leakage current Iv of the electronic component 410 through the node N1 according to the data voltage Vdata. In the embodiment of the disclosure, during a scan period, the compensation transistor Tc may compensate the threshold voltage of the driving transistor Td at the control terminal (gate terminal) of the driving transistor Td. Moreover, during the bias period, the node voltage of the node N1 may be maintained at the voltage of the data voltage Vdata minus a delta voltage dV when the driving transistor Td is turned-on for providing the compensation current Id. The delta voltage dV is caused by the compensation current Id to compensate the leakage current Iv flowing through the electronic component 410 when the electronic device 400 in the current balance state. In the embodiment of the disclosure, during the scan transistor Ts and the compensation transistor Tc are switched from turn-on to turn-off, the scan transistor Ts and the compensation transistor Tc may cause the clock feedthrough effect at the node N1 and the control terminal of the driving transistor Td by a coupling capacitor between the control terminal and the second terminal of the scan transistor Ts and a coupling capacitor between the control terminal and the second terminal of the compensation transistor Tc, respectively. In the embodiment of the disclosure, the capacitor C1 and the capacitor C2 may respectively compensate the clock feedthrough effect according to the bias signal BS. In addition, in some embodiments of the disclosure, the capacitor C2 is optional.

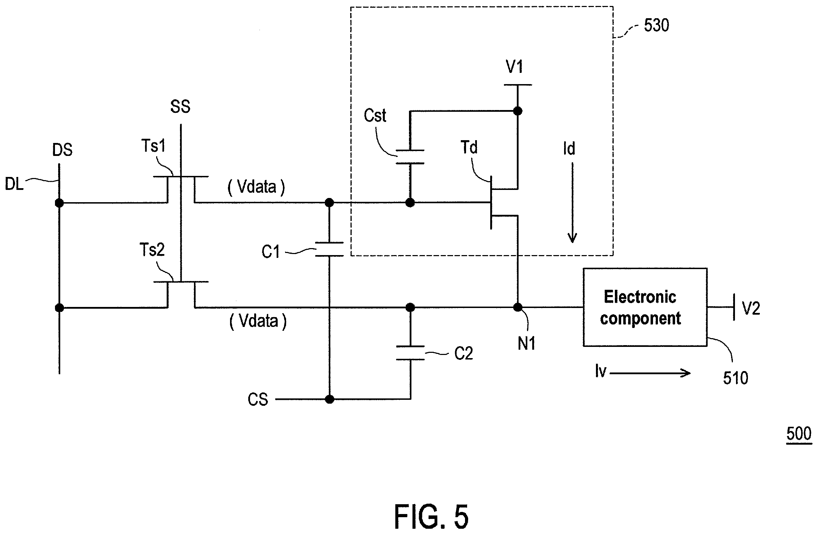

FIG. 5 is a schematic diagram of an electronic device without threshold voltage compensation according to an embodiment of the disclosure. Referring to FIG. 5, an electronic device 500 includes an electronic component 510, a voltage source circuit 530, a scan transistor Ts1, a scan transistor Ts2 , a first capacitive coupling component, a second capacitive coupling component and data line DL. The electronic component 510 may include a varactor or other tunable component. The first capacitive coupling component is a capacitor C1 which is similar as the MIM capacitor shown in the embodiment of FIG. 3A, and the second capacitive coupling component is a capacitor C2 which is also similar as the MIM capacitor shown in the embodiment of FIG. 3A, but the disclosure is not limited thereto. In other embodiments of the disclosure, the first capacitive coupling component and the second capacitive coupling component may also be implemented as the transistor T1 of the embodiment of FIG. 3B respectively.

In the embodiment of the disclosure, the electronic component 510 is electronically connected to the scan transistor Ts2 and the capacitor C2 through a node N1. A first terminal of the scan transistor Ts1 is electrically connected to the data line DL. A second terminal of the scan transistor Ts1 is electrically connected to voltage source circuit 530 and the capacitor C1. A control terminal of the scan transistor Ts1 is electrically connected to a scan signal SS. The voltage source circuit 530 is electrically connected to the capacitor C2 and the scan transistor Ts2 through the node N1. A first terminal of the scan transistor Ts2 is electrically connected to the data line DL. A second terminal of the scan transistor Ts2 is electrically connected to the voltage source circuit 530 and the capacitor C2. A control terminal of the scan transistor Ts2 is electrically connected to a scan signal SS. A first terminal of the capacitor C1 is electrically connected to the second terminal of the scan transistor Ts1 and the voltage source circuit 530. A first terminal of the capacitor C2 is electrically connected to the voltage source circuit 530 and the second terminal of the scan transistor Ts2 through the node N1. A second terminal of the capacitor C1 is electrically connected to a second terminal of the capacitor C2, and is electrically connected to a compensation signal CS. The electronic component 510 is coupled between the node N1 and a second operation voltage V2.

In the embodiment of the disclosure, the voltage source circuit 530 includes a driving transistor Td and a storage capacitor Cst. A first terminal of the driving transistor Td is electrically connected to a first operation voltage V1. A second terminal of the driving transistor Td is electrically connected to the electronic component 510 and the capacitor C2 through the node N1. A control terminal of driving transistor Td is electrically connected to the second terminal of the scan transistor Ts1 and the capacitor C1. A first terminal of the storage capacitor Cst is electrically connected to the first operation voltage V1. A second terminal of the storage capacitor Cst is electrically connected to the control terminal of the driving transistor Td. In the embodiment of the disclosure, the first terminal and the second terminal of the driving transistor Td may be a source terminal and a drain terminal and the control terminal of the driving transistor Td may be a gate terminal. In the embodiment of the disclosure, the scan transistor Ts1, the scan transistor Ts2 and the driving transistor Td may be an N-type transistor or a P-type transistor, respectively.

In the embodiment of the disclosure, the scan transistor Ts1 transfers a data voltage Vdata to the control terminal of the driving terminal Td according to a data signal DS transmitted by the data line DL, and scan transistor Ts2 also transfers the data voltage Vdata to the node N1 according to the data signal DS transmitted by the data line DL. The voltage source circuit 530 may generate a compensation current Id to compensate a leakage current Iv of the electronic component 510 through the node N1 according to the data voltage Vdata. In the embodiment of the disclosure, during the scan transistor Ts1 and the scan transistor Ts2 are switched from turn-on to turn-off at the same time, the scan transistor Ts1 and the scan transistor Ts2 may cause the clock feedthrough effect at the control terminal of the driving transistor Td and the node N1 by a coupling capacitor between the control terminal and the second terminal of the scan transistor Ts1 and a coupling capacitor between the control terminal and the second terminal of the scan transistor Ts2, respectively.. In the embodiment of the disclosure, the capacitor C1 and the capacitor C2 may respectively compensate the clock feedthrough effect according to the compensation signal CS. In addition, in some embodiments of the disclosure, the capacitor C1 is optional.

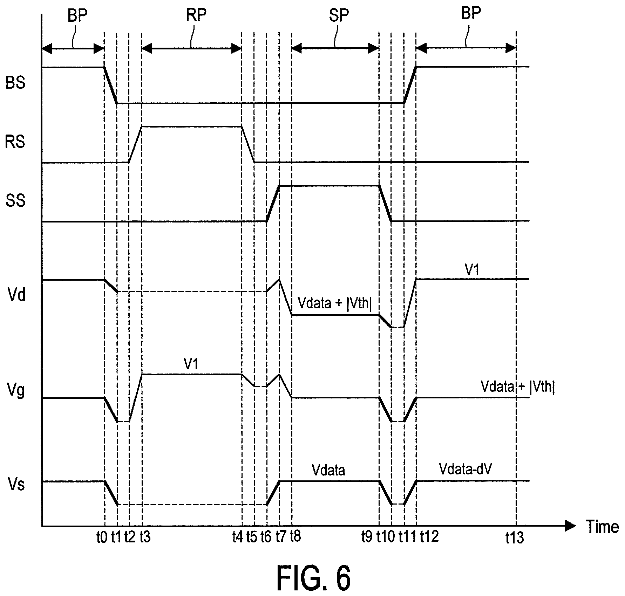

FIG. 6 is a timing diagram of related voltages and signals according to the embodiment of FIG. 4 of the disclosure. Referring to FIG. 4 and FIG. 6, the electronic device 400 may be operated at a bias period BP, a reset period RP and a scan period SP. During the period from time t0 to time t1, the bias signal BS changes to the low voltage level, the reset signal RS and the scan signal SS maintain at the low voltage level, respectively. The voltages Vd, Vg and Vs of the first, second and control terminal of the driving transistor Td fall simultaneously. During the period from time t2 to time t3, the reset signal RS rise to the high voltage level, so the voltage Vg of the control terminal of the driving transistor Td rises to the first operation voltage V1. During the reset period RS from time t3 to time t4, the voltage Vg of the control terminal of the driving transistor Td is maintained at the first operation voltage V1. During the period from time t4 to time t5, the reset signal RS falls to the low voltage level, so the voltage Vg of the control terminal of the driving transistor Td falls simultaneously.

During the period from time t6 to time t7, the scan signal SS changes to the high voltage level, the reset signal RS and the bias signal BS maintain at the low voltage level, respectively. The voltages Vd, Vg and Vs of the first, second and control terminals of the driving transistor Td rise simultaneously. During the period from time t8 to time t9, the voltage Vs of the second terminal of the driving transistor Td changes to the data voltage Vdata. The voltages Vd and Vg of the first and control terminals of the driving transistor Td changes to the voltage of the data voltage Vdata plus the absolute value of threshold voltage Vth of the driving transistor Td.

During the scan period SP from time t9 to time t10, the scan signal SS falls to the low voltage level, so the voltages Vd, Vg and Vs of the first, second and control terminals of the driving transistor Td fall simultaneously because the clock feedthrough effect. During the bias period BP from time t11 to time t12, the bias signal BS rises to high voltage level. At the same time, the capacitor C1 and the capacitor C2 may respectively compensate the clock feedthrough effect according to the bias signal BS. Thus, the voltage Vg of the control terminal of the driving transistor Td rises to the voltage of the data voltage Vdata plus the absolute value of threshold voltage Vth of the driving transistor Td, and the voltage Vs of the second terminal of the driving transistor recovers.

Therefore, during the period from time t12 to time t13, the voltage Vg of the control terminal of the driving transistor Td rises to the voltage of the data voltage Vdata plus the absolute value of threshold voltage Vth of the driving transistor Td. Moreover, the voltage Vs of the control terminal of the driving transistor Td and the node voltage of the node N1 may recovery to the voltage of the data voltage Vdata minus a delta voltage dV when the driving transistor Td is turned-on for providing the compensation current Id. The delta voltage dV is caused by the compensation current Id to compensate the leakage current Iv flowing through the voltage source circuit 430 when the electronic device 400 in the current balance state. In addition, the relevant voltages and signals in the above-mentioned embodiment of FIG. 5 may also be analogized by this embodiment, so as to realize clock feedthrough effect compensation.

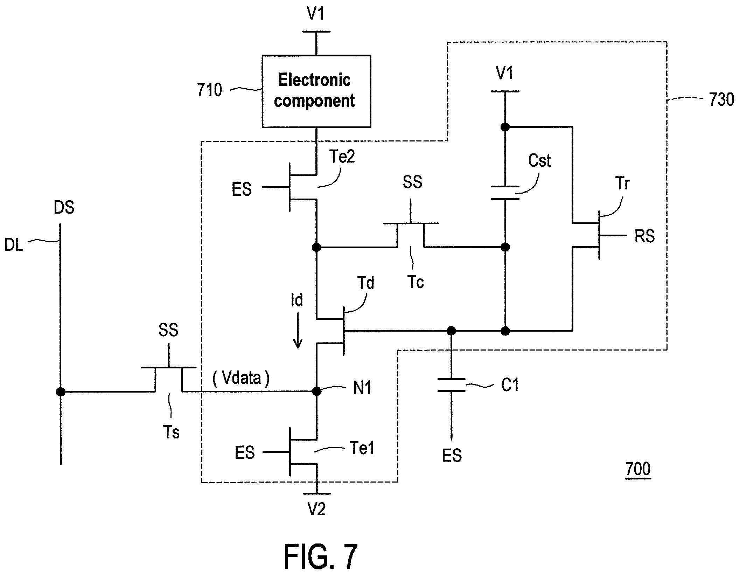

FIG. 7 is a schematic diagram of an electronic device with threshold voltage compensation according to an embodiment of the disclosure. Referring to FIG. 7, an electronic device 700 includes an electronic component 710, a current sink circuit 730, a scan transistor Ts, a capacitive coupling component and data line DL. The electronic component 710 may include a light-emitting diode. The capacitive coupling component is a capacitor C1 which is similar as the MIM capacitor shown in the embodiment of FIG. 3A, but the disclosure is not limited thereto. In other embodiments of the disclosure, the capacitive coupling component may also be implemented as the transistor T1 of the embodiment of FIG. 3B.

In the embodiment of the disclosure, the electronic component 710 is electronically connected between a first operation voltage V1 and the current sink circuit 730. A first terminal of the scan transistor Ts is electrically connected to the data line DL. A second terminal of the scan transistor Ts is electrically connected to the current sink circuit 730 through a node N1. A control terminal of the scan transistor Ts is electrically connected to a scan signal SS. A first terminal of the capacitor C1 is electrically connected to the current sink circuit 730. A second terminal of the capacitor C1 is electrically connected to an emission signal ES.

In the embodiment of the disclosure, the current sink circuit 730 includes a driving transistor Td, a compensation transistor Tc, an emission transistor Te1, an emission transistor Te2, a reset transistor Tr and a storage capacitor Cst. In the embodiment of the disclosure, a first terminal of the emission transistor Te2 is electrically connected to the electronic component 710. A second terminal of the emission transistor Te2 is electrically connected to a first terminal of the driving transistor Td and a first terminal of the compensation transistor Tc. A control terminal of the emission transistor Te2 is electrically connected to an emission signal EM. A first terminal of the storage capacitor Cst is electrically connected to a first operation voltage V1. A second terminal of the compensation transistor Tc is electrically connected to a second terminal of the storage capacitor Cst, a control terminal of the driving transistor Td and a first terminal of the capacitor C1. A control terminal of the compensation transistor Tc is electrically connected to the scan signal SS. A first terminal of the reset transistor Tr is electrically connected to the first operation voltage V1. A second terminal of the reset transistor Tr is electrically connected to the control terminal of the driving transistor Td. A control terminal of the reset transistor Tr is electrically connected to a reset signal RS. A second terminal of the driving transistor Td is electrically connected to the second terminal of the scan transistor Ts and a first terminal of the emission transistor Te1 through the node N1. A second terminal of the emission transistor Te1 is electrically connected to a second operation voltage V2. A control terminal of the emission transistor Te1 is electrically connected to the emission signal ES.

In the embodiment of the disclosure, the first terminal and the second terminal of the each above transistor may be a source terminal and a drain terminal, and the control terminal of the each above transistor may be a gate terminal. In the embodiment of the disclosure, the compensation transistor Tc, the emission transistor Te1, the emission transistor Te2, the reset transistor Tr, the scan transistor Ts and the driving transistor Td may be an N-type transistor or a P-type transistor, respectively.

In the embodiment of the disclosure, the scan transistor Ts transfers a data voltage Vdata to the node N1 according to a data signal DS transmitted by the data line DL, and the current sink circuit 730 may generate a driving current Id to drive the electronic component 710 through the node N1 according to the data voltage Vdata. In the embodiment of the disclosure, during a scan period, the compensation transistor Tc may compensate the threshold voltage of the driving transistor Td at the control terminal (gate terminal) of the driving transistor Td. Moreover, during an emission period, the voltage of the control terminal of the driving transistor Td may be maintained at the voltage of the data voltage Vdata plus the absolute value of threshold voltage Vth of the driving transistor Td. During the compensation transistor Tc is switched from turn-on to turn-off, the compensation transistor Tc may cause the clock feedthrough effect at the control terminal of the driving transistor Td by a coupling capacitor between the control terminal and the second terminal of the compensation transistor Tc. In the embodiment of the disclosure, the capacitor C1 may compensate the clock feedthrough effect according to the emission signal ES.

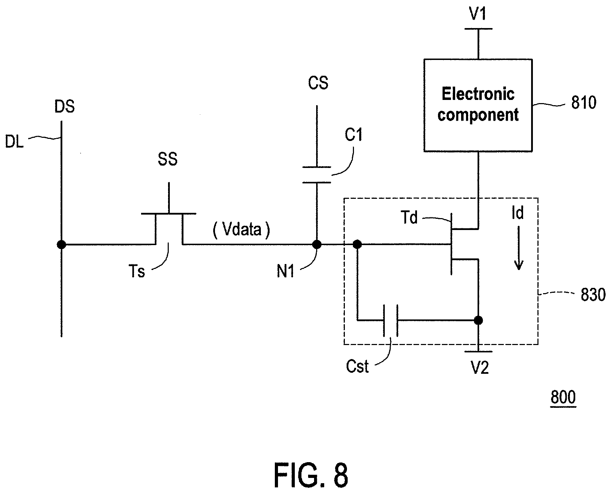

FIG. 8 is a schematic diagram of an electronic device without threshold voltage compensation according to an embodiment of the disclosure. Referring to FIG. 8, an electronic device 800 includes an electronic component 810, a current sink circuit 830, a scan transistor Ts, a capacitive coupling component and data line DL. The capacitive coupling component is a capacitor C1 which is similar as the MIM capacitor shown in the embodiment of FIG. 3A, but the disclosure is not limited thereto. In other embodiments of the disclosure, the capacitive coupling component may also be implemented as the transistor T1 of the embodiment of FIG. 3B. The electronic component 810 may include a light-emitting diode. In the embodiment of the disclosure, the electronic component 810 is electronically connected between a first operation voltage V1 and the current sink circuit 830. A first terminal of the scan transistor Ts is electrically connected to the data line DL. A second terminal of the scan transistor Ts is electrically connected to the current sink circuit 830 through a node N1. A control terminal of the scan transistor Ts is electrically connected to a scan signal SS. A first terminal of the capacitor C1 is electrically connected to the compensation signal CS. A second terminal of the capacitor C1 is electrically connected to the current sink circuit 830 through the node N1.

In the embodiment of the disclosure, the current sink circuit 830 includes a driving transistor Td and a storage capacitor Cst. In the embodiment of the disclosure, a first terminal of the driving transistor Td is electrically connected to the electronic component 810. A second terminal of the driving transistor Td is electrically connected to a second operation voltage V2. The second terminal of the capacitor C1 is electrically connected to a control terminal of the driving transistor Td, a first terminal of the storage capacitor Cst and the second terminal of the scan transistor Ts through the node N1. The second terminal of storage capacitor Cst is electrically connected to the second operation voltage V2. In the embodiment of the disclosure, the scan transistor Ts and the driving transistor Td may be an N-type transistor or a P-type transistor, respectively.

In the embodiment of the disclosure, the scan transistor Ts transfers a data voltage Vdata to the node N1 according to a data signal DS transmitted by the data line DL, and the current sink circuit 830 may generate a driving current Id to drive the electronic component 810 according to the data voltage Vdata. In the embodiment of the disclosure, during an emission period, the voltage of the control terminal of the driving transistor Td may be maintained at the voltage of the data voltage Vdata. In the embodiment of the disclosure, during the scan transistor Ts is switched from turn-on to turn-off, the scan transistor Ts may cause the clock feedthrough effect at the control terminal of the driving transistor (the node N1) by a coupling capacitor between the control terminal and the second terminal of the scan transistor Ts. In the embodiment of the disclosure, the capacitor C1 may compensate the clock feedthrough effect according to the compensation signal CS.

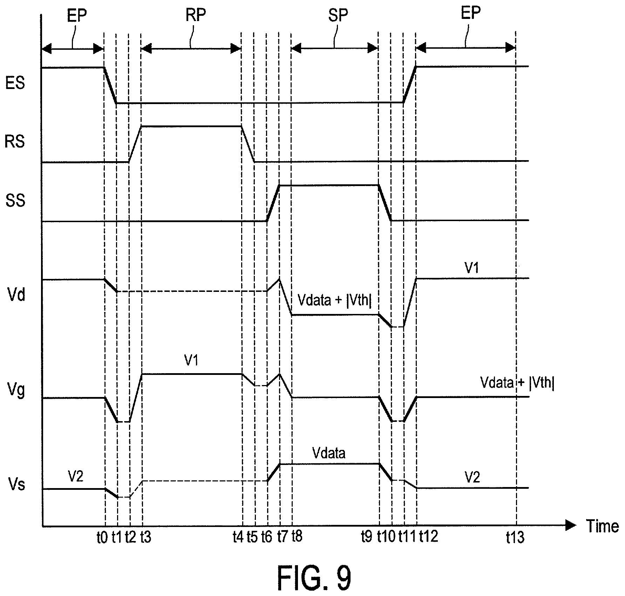

FIG. 9 is a timing diagram of related voltages and signals according to the embodiment of FIG. 7 of the disclosure. Referring to FIG. 7 and FIG. 9, the electronic device 700 may be operated at an emission period EP, a reset period RP and a scan period SP. During the period from time t0 to time t1, the emission signal ES changes to the low voltage level, the reset signal RS and the scan signal SS maintain at the low voltage level, respectively. The voltages Vd, Vs and Vg of the first, second and control terminal of the driving transistor Td fall simultaneously. During the period from time t2 to time t3, the reset signal RS rise to the high voltage level, so the voltage Vg of the control terminal of the driving transistor Td rises to the first operation voltage V1. During the reset period RS from time t3 to time t4, the voltage Vg of the control terminal of the driving transistor Td is maintained at the first operation voltage V1. During the period from time t4 to time t5, the reset signal RS falls to the low voltage level, so the voltage Vg of the control terminal of the driving transistor Td falls simultaneously.

During the period from time t6 to time t7, the scan signal SS changes to the high voltage level, the reset signal RS and the emission signal ES maintain at the low voltage level, respectively. The voltages Vd, Vs and Vg of the first, second and control terminals of the driving transistor Td rise simultaneously. During the scan period SP from time t8 to time t9, the voltage Vs of the second terminal of the driving transistor Td changes to the data voltage Vdata. The voltages Vd and Vg of the first and control terminals of the driving transistor Td changes to the voltage of the data voltage Vdata plus the absolute value of threshold voltage Vth of the driving transistor Td.

During the period from time t9 to time t10, the scan signal SS falls to the low voltage level, so the voltages Vd, Vs and Vg of the first, second and control terminals of the driving transistor Td fall simultaneously because the clock feedthrough effect. During the period from time t11 to time t12, the emission signal ES rises to high voltage level. At the same time, the capacitor C1 may respectively compensate the clock feedthrough effect according to the emission signal ES. Thus, the voltage of the control terminal of the driving transistor Td may return to the voltage of the data voltage Vdata plus the absolute value of threshold voltage Vth of the driving transistor Td. Therefore, during the emission period EP from time t12 to time t13, the voltage Vg of the control terminal of the driving transistor Td may be maintained at the voltage of the data voltage Vdata plus the absolute value of threshold voltage Vth of the driving transistor Td.

In addition, the relevant voltages and signals in the above-mentioned embodiment of FIG. 8 may also be analogized by this embodiment, so as to realize clock feed-through effect compensation.

In summary, the display device of the disclosure can effectively reduce or eliminate the clock feedthrough effect caused by the scan transistor and/or the compensation transistor, so as to effectively drive the pixels. Moreover, the display device of some embodiments of the disclosure may have the compensation function of the threshold voltage of the driving transistor.

## Claims

1. A light-emitting diode, LED, active-matrix display device including a plurality of data lines, a plurality of scan lines and a pixel array,
wherein each pixel of the pixel array comprises an electronic device (400) and a light-emitting diode,
the electronic device (400), comprising:
a first scan transistor (Ts), comprising a first terminal, a second terminal and a control terminal, wherein the control terminal of the first scan transistor (Ts) is connected to one of the scan lines (SS);
a voltage source circuit (430), comprising a driving transistor (Td) and a compensation transistor (Tc), wherein the driving transistor (Td) is electrically connected to the first scan transistor (Ts), the driving transistor (Td) comprising a first terminal, a second terminal and a control terminal, and the compensation transistor (Tc) comprising a first terminal, a second terminal and a control terminal;
wherein the light-emitting diode (410) is electrically connected to the first terminal of the driving transistor (Td) at a first node (N1);
a first capacitor (C1), wherein a first terminal of the first capacitor (C1) is electrically connected to the control terminal of the driving transistor (Td), a second terminal of the first capacitor (C1) is electrically connected to a bias terminal (BS); and
a second capacitor (C2), wherein a first terminal of the second capacitor (C2) is electrically connected to the first node (N1), and a second terminal of the second capacitor (C2) is electrically connected to the bias terminal (BS), wherein the first terminal of the first scan transistor (Ts) is electrically connected to one of the data lines (DL), and the second terminal of the first scan transistor (Ts) is electrically connected to the first node (N1),
wherein the second terminal of the driving transistor (Td) is electrically connected to the first terminal of the compensation transistor (Tc), the control terminal of the driving transistor (Td) is electrically connected to the second terminal of compensation transistor (Tc), and the control terminal of the compensation transistor (Tc) is electrically connected to said scan line (SS),
wherein the LED active-matrix display device is configured to supply a scan signal (SS) to said scan line (SS) and a bias signal (BS) to said bias terminal (BS), such that:
at the beginning of a scan period (SP), the scan signal (SS) switches from a low voltage level to a high voltage level to turn the first scan transistor (Ts) on and the compensation transistor (Tc) on, and the compensation signal (BS) remains at the low voltage level,
at the end of the scan period (SP), the scan signal (SS) switches from the high voltage level to the low voltage level to turn the first scan transistor (Ts) off and the compensation transistor (Tc) off, and the compensation signal (BS) remains at the low voltage level,
then, during a bias period (BP), the bias signal (BS) switches from the low voltage level to the high voltage level, and the first and second capacitors (C1, C2) are configured to compensate for the clock feedthrough effect at the first node (N1) and the control terminal of the driving transistor (Td), occurring when the scan transistor (Ts) and the compensation transistor (Tc) are switched from turn-on to turn-off at the end of the scan period (SP).

2. The LED active-matrix display device according to claim 1, wherein the first capacitor is composed of a transistor, and the first and second terminals of the transistor are connected to each other.

3. The LED active-matrix display device according to claim 1, wherein the second capacitor (C2) is composed of another transistor, and the first and second terminals of the another transistor are connected to each other.

4. The LED active-matrix display device according to claim 1, further comprising:
a storage capacitor (Cst), electrically connected to the control terminal of the driving transistor (Td).

5. The LED active-matrix display device according to claim 1, further comprising:
a reset transistor (Tr), electrically connected to the control terminal of the driving transistor (Td).

6. The LED active-matrix display device according to claim 1, wherein a second terminal of the first capacitor (C1) is electrically connected to the bias terminal (BS), an emission terminal (ES) or a compensation terminal (CS).

7. The LED active-matrix display device according to claim 1, further comprising:
a bias transistor (Tb), electrically connected to a second terminal of the driving transistor (Td).

## Patentansprüche

1. Lichtemittierende Diode, LED, Aktivmatrix-Anzeigevorrichtung die eine Vielzahl von Datenleitungen, eine Vielzahl von Abtastleitungen und ein Pixelarray umfasst,
wobei jedes Pixel des Pixelarrays eine elektronische Vorrichtung (400) und eine lichtemittierende Diode umfasst,
wobei die elektronische Vorrichtung (400) umfasst:
einen ersten Abtasttransistor (Ts), der einen ersten Anschluss, einen zweiten Anschluss und einen Steueranschluss umfasst, wobei der Steueranschluss des ersten Abtasttransistors (Ts) mit einer der Abtastleitungen (SS) verbunden ist;
eine Spannungsquellenschaltung (430), die einen Ansteuertransistor (Td) und einen Kompensationstransistor (Tc) umfasst, wobei der Ansteuertransistor (Td) elektrisch mit dem ersten Abtasttransistor (Ts) verbunden ist, wobei der Ansteuertransistor (Td) einen ersten Anschluss, einen zweiten Anschluss und einen Steueranschluss umfasst und der Kompensationstransistor (Tc) einen ersten Anschluss, einen zweiten Anschluss und einen Steueranschluss umfasst;
wobei die lichtemittierende Diode (410) an einem ersten Knoten (N1) elektrisch mit dem ersten Anschluss des Ansteuertransistors (Td) verbunden ist;
einen ersten Kondensator (C1), wobei ein erster Anschluss des ersten Kondensators (C1) elektrisch mit dem Steueranschluss des Ansteuertransistors (Td) verbunden ist, ein zweiter Anschluss des ersten Kondensators (C1) elektrisch mit einem Vorspannungsanschluss (BS) verbunden ist; und
einen zweiten Kondensator (C2), wobei ein erster Anschluss des zweiten Kondensators (C2) elektrisch mit dem ersten Knoten (N1) verbunden ist und ein zweiter Anschluss des zweiten Kondensators (C2) elektrisch mit dem Vorspannungsanschluss (BS) verbunden ist, wobei der erste Anschluss des ersten Abtasttransistors (Ts) elektrisch mit einer der Datenleitungen (DL) verbunden ist, und der zweite Anschluss des ersten Abtasttransistors (Ts) elektrisch mit dem ersten Knoten (N1) verbunden ist,
wobei der zweite Anschluss des Ansteuertransistors (Td) elektrisch mit dem ersten Anschluss des Kompensationstransistors (Tc) verbunden ist, der Steueranschluss des Ansteuertransistors (Td) elektrisch mit dem zweiten Anschluss des Kompensationstransistors (Tc) verbunden ist, und der Steueranschluss des Kompensationstransistors (Tc) elektrisch mit der Abtastleitung (SS) verbunden ist,
wobei die LED Aktivmatrix-Anzeigevorrichtung so konfiguriert ist, dass sie ein Abtastsignal (SS) an die Abtastleitung (SS) und ein Vorspannungssignal (BS) an den Vorspannungsanschluss (BS) liefert, sodass:
zu dem Beginn einer Abtastperiode (SP) das Abtastsignal (SS) von einem niedrigen Spannungspegel auf einen hohen Spannungspegel wechselt, um den ersten Abtasttransistor (Ts) einzuschalten und den Kompensationstransistor (Tc) einzuschalten, und das Kompensationssignal (BS) auf dem niedrigen Spannungspegel verbleibt,
an dem Ende der Abtastperiode (SP) das Abtastsignal (SS) von dem hohen Spannungspegel auf den niedrigen Spannungspegel umschaltet, um den ersten Abtasttransistor (Ts) auszuschalten und den Kompensationstransistor (Tc) auszuschalten, und das Kompensationssignal (BS) auf dem niedrigen Spannungspegel verbleibt;
anschließend, während einer Vorspannungsperiode (BP), schaltet das Vorspannungssignal (BS) von dem niedrigen Spannungspegel auf den hohen Spannungspegel um, und der erste und der zweite Kondensator (C1, C2) sind so konfiguriert, dass sie den Clock-Feedthrough-Effekt an dem ersten Knoten (N1) und an dem Steueranschluss des Ansteuertransistors (Td) kompensieren, der auftritt, wenn der Abtasttransistor (Ts) und der Kompensationstransistor (Tc) an dem Ende der Abtastperiode (SP) von dem eingeschalteten in den ausgeschalteten Zustand geschaltet werden.

2. LED Aktivmatrix-Anzeigevorrichtung nach Anspruch 1, wobei der erste Kondensator aus einem Transistor zusammengesetzt ist und der erste und der zweite Anschluss des Transistors miteinander verbunden sind.

3. LED Aktivmatrix-Anzeigevorrichtung nach Anspruch 1, wobei der zweite Kondensator (C2) aus einem weiteren Transistor zusammengesetzt ist und der erste und der zweite Anschluss des weiteren Transistors miteinander verbunden sind.

4. LED Aktivmatrix-Anzeigevorrichtung nach Anspruch 1, ferner umfassend:
einen Speicherkondensator (Cst), der elektrisch mit dem Steueranschluss des Ansteuertransistors (Td) verbunden ist.

5. LED Aktivmatrix-Anzeigevorrichtung nach Anspruch 1, ferner umfassend:
einen Rücksetztransistor (Tr), der elektrisch mit dem Steueranschluss des Ansteuertransistors (Td) verbunden ist.

6. LED Aktivmatrix-Anzeigevorrichtung nach Anspruch 1, wobei ein zweiter Anschluss des ersten Kondensators (C1) elektrisch mit dem Vorspannungsanschluss (BS), einem Emissionsanschluss (ES) oder einem Kompensationsanschluss (CS) verbunden ist.

7. LED Aktivmatrix-Anzeigevorrichtung nach Anspruch 1, ferner umfassend:
einen Vorspannungstransistor (Tb), der elektrisch mit einem zweiten Anschluss des Ansteuertransistors (Td) verbunden ist.

## Revendications

1. Dispositif d'affichage à matrice active à diodes électroluminescentes (LED) comprenant une pluralité de lignes de données, une pluralité de lignes de balayage et une matrice de pixels,
dans lequel chaque pixel de la matrice de pixels comprend un dispositif électronique (400) et une diode électroluminescente,
le dispositif électronique (400) comprenant :
un premier transistor de balayage (Ts), comprenant une première borne, une deuxième borne et une borne de commande, la borne de commande du premier transistor de balayage (Ts) étant connectée à l'une des lignes de balayage (SS) ;
un circuit de source de tension (430), comprenant un transistor de pilotage (Td) et un transistor de compensation (Tc), le transistor de pilotage (Td) étant reliée électriquement au premier transistor de balayage (Ts), le transistor de pilotage (Td) comportant une première borne, une deuxième borne et une borne de commande, et le transistor de compensation (Tc) comportant une première borne, une deuxième borne et une borne de commande ;
dans lequel la diode électroluminescente (410) est reliée électriquement à la première borne du transistor de pilotage (Td) au niveau d'un premier nœud (N1) ;
un premier condensateur (C1), dans lequel une première borne du premier condensateur (C1) est reliée électriquement à la borne de commande du transistor de pilotage (Td), une deuxième borne du premier condensateur (C1) est reliée électriquement à une borne de polarisation (BS) ; et
un deuxième condensateur (C2), dont une première borne est reliée électriquement au premier nœud (N1) et dont une deuxième borne est reliée électriquement à la borne de polarisation (BS), la première borne du premier transistor de balayage (Ts) étant reliée électriquement à l'une des lignes de données (DL), et la deuxième borne du premier transistor de balayage (Ts) est reliée électriquement au premier nœud (N1),
dans lequel la deuxième borne du transistor de pilotage (Td) est reliée électriquement à la première borne du transistor de compensation (Tc), la borne de commande du transistor de pilotage (Td) est reliée électriquement à la deuxième borne du transistor de compensation (Tc), et la borne de commande du transistor de compensation (Tc) est reliée électriquement à ladite ligne de balayage (SS),
dans lequel le dispositif d'affichage à matrice active à LED est configuré pour fournir un signal de balayage (SS) à ladite ligne de balayage (SS) et un signal de polarisation (BS) à ladite borne de polarisation (BS), de telle sorte que :
au début d'une période de balayage (SP), le signal de balayage (SS) passe d'un niveau de tension bas à un niveau de tension haut pour activer le premier transistor de balayage (Ts) et le transistor de compensation (Tc), et le signal de polarisation (BS) reste au niveau de tension bas,
à la fin de la période de balayage (SP), le signal de balayage (SS) passe du niveau de tension haut au niveau de tension bas pour désactiver le premier transistor de balayage (Ts) et le transistor de compensation (Tc), et le signal de polarisation (BS) reste au niveau de tension bas,
ensuite, pendant une période de polarisation (BP), le signal de polarisation (BS) passe du niveau de tension bas au niveau de tension haut, et les premier et deuxième condensateurs (C1, C2) sont configurés pour compenser l'effet de diaphonie d'horloge au niveau du premier nœud (N1) et de la borne de commande du transistor de pilotage (Td), qui se produit lorsque le transistor de balayage (Ts) et le transistor de compensation (Tc) passent de l'état conducteur à l'état bloqué à la fin de la période de balayage (SP).

2. Dispositif d'affichage à matrice active à LED selon la revendication 1, dans lequel le premier condensateur est constitué d'un transistor, et les première et deuxième bornes de ce transistor sont reliées entre elles.

3. Dispositif d'affichage à matrice active à LED selon la revendication 1, dans lequel le deuxième condensateur (C2) est constitué d'un autre transistor, et les première et deuxième bornes de cet autre transistor sont reliées entre elles.

4. Dispositif d'affichage à matrice active à LED selon la revendication 1, comprenant en outre :
un condensateur de stockage (Cst), reliée électriquement à la borne de commande du transistor de pilotage (Td).

5. Dispositif d'affichage à matrice active à LED selon la revendication 1, comprenant en outre :
un transistor de réinitialisation (Tr), reliée électriquement à la borne de commande du transistor de pilotage (Td).

6. Dispositif d'affichage à matrice active à LED selon la revendication 1, dans lequel une deuxième borne du premier condensateur (C1) est reliée électriquement à la borne de polarisation (BS), à une borne d'émission (ES) ou à une borne de compensation (CS).

7. Dispositif d'affichage à matrice active à LED selon la revendication 1, comprenant en outre :
un transistor de polarisation (Tb), reliée électriquement à une deuxième borne du transistor de pilotage (Td).
